# EUROPEAN PATENT SPECIFICATION

(11) **EP 2 082 375 B1**
(45) Date of publication and mention of the grant of the patent: **26.11.2014**
(21) Application number: 07835343.0
(22) Date of filing: 19.10.2007
(51) Int. Cl.: G05B 23/02

(54) **FAULT ISOLATION IN A VEHICLE**
FEHLERISOLATION IN EINEM FAHRZEUG
ISOLATION DE DÉFAILLANCE

(30) Priority: 01.11.2006 SE 0602306
(43) Date of publication of application: 29.07.2009
(73) Proprietor: Scania CV AB (publ), 151 87 Södertälje (SE)
(72) Inventor: NYBERG, Mattias, 125 57 Älvsjö (SE)
(86) International application number: PCT/SE2007/050758
(87) International publication number: WO 2008/054309

(56) References cited:
- GB-A- 2 303 231
- GB-A- 2 327 511
- US-A- 5 099 436
- US-A- 6 055 468
- US-A1- 2003 195 680
- US-A1- 2004 243 636
- SUES R H ET AL: "System reliability and sensitivity factors via the MPPSS method", PROBALISTIC ENGINEERING MECHANICS, COMPUTATIONAL MECHANICS PUBLICATIONS, SOUTHAMPTON, FR, vol. 20, no. 2, 1 April 2005 (2005-04-01), pages 148-157, XP004995329, ISSN: 0266-8920, DOI: DOI:10.1016/J.PROBENGMECH.2005.02.001

## Description

### THE BACKGROUND OF THE INVENTION AND PRIOR ART

The present invention relates generally to diagnosing complex systems and devices including a large number of parts and components. More particularly the invention relates to an online diagnosis engine according to the preamble of claim 1 and a motor vehicle according to claim 7. The invention also relates to a method of estimating a status of an entity according to the preamble of claim 8, a computer program according to claim 14 and a computer program product according to claim 15.

As today's technical systems generally become increasingly complex, efficient monitoring and detection of malfunctioning components is an area that gains progressive importance. Fault diagnosis algorithms may be applied to determine why an entity does not behave as intended. Typically, "diagnosing" the entity means selecting a subset of a predetermined set of causes responsible for the entity's incorrect behavior. A diagnosis must both explain the incorrect behavior and optimize some objective function, such as probability of correctness or cost of incorrect diagnosis. The need to diagnose is a common reason to measure or to test the entity. It is assumed that the entity contains a finite number of diagnosed components. Further, there is an assumption that failures of the entity are caused only by faults in one of these components.

Document US 2004/0243636 discloses a diagnosis engine for estimating a status of an entity with a plurality of components, which each is assumed to have a health status.

In the *artificial intelligence* (AI) discipline, so-called consistency based diagnosis is the dominant methodology for diagnosing entities. A consistency based diagnosis points at one set of components whose abnormal behavior could explain why a system does not function as intended. Here, a set of diagnoses points at different such possible sets of components. This methodology and its strong relationship to the methodology in the field of automatic control is described in *"*Conflicts versus analytical redundancy relations: a comparative analysis of the model based diagnosis approach from the artificial intelligence and automatic control perspectives", by Cordier, M.-O. et al., IEEE Trans Syst Man Cybern B Cybern. 2004 October;34(5).

Modern automotive vehicles often include a diagnostic system, which stores a *diagnostic trouble code* (DTC) when a component is found to be faulty. In the first generations of vehicular diagnostic systems, each diagnostic test checked exactly one component for faulty behavior. The DTCs could therefore be used to state exactly which components that were faulty and which components that where normal respectively. Recently, e.g. regulatory demands for reduced emission levels, have required introduction of diagnostic tests that simultaneously check the behavior of several components, i.e. *multi-component tests* or so-called plausibility tests. These general types of tests, e.g. being based on *analytical redundancy relations* (ARR), may come into conflict with the diagnostic framework that is based on the previously used single component tests. Multi-component tests are problematic because they may be incapable of identifying unique DTCs. Instead, a level between the *normal* and the *faulty* statuses may have to be defined, which reflects a *suspected fault* status.

Today's automotive vehicles often include a number of *electronic control units* (ECUs). These units communicate over a network, and thus represent a distributed system. In such a distributed system, a diagnostic test in one ECU may check components that are physically and/or logically controlled by another ECU. In this context, the ECUs may exchange information like sensor values, actuator values and calculated values.

Of course, receiving test data from one or more ECUs, and based thereon, deriving a diagnosis in respect of a complex system (e.g. an automotive vehicle) is a task that is computationally very complex, which for example is explained by de Kleer, J. in the article "Focusing on probable diagnoses", AAAI-91, pp. 842-848, (1991). The complexity of this task typically increases exponentially with the number of tests. Hence, performing this type of diagnosing by means of an embedded design may be problematic, and in many cases even impossible.

### SUMMARY OF THE INVENTION

The object of the present invention is therefore to provide a solution, which solves the problem above, and thus offers an efficient diagnosing of complex entities and that can be executed in real time.

According to one aspect of the invention, the object is achieved by the initially described online diagnosis engine, wherein the processing unit implements simplified Boolean functions representing a truth-table of all possible combinations of test results and their status reports. The processing unit is further adapted to generate the status report in real time based on the test results currently available on the input interface.

This diagnosis engine is advantageous because, with respect to most technical implementations (i.e. systems having a relatively high degree of correlation between different components and diagnoses), the simplified Boolean functions can be made very uncomplicated relative to the entire truth-table that it represents. Therefore, the test result for such an implementation may be processed in a highly efficient manner. Moreover, also partial test results can produce status reports. I.e. as soon as the input interface receives one or more individual test results, a corresponding status report can be delivered, essentially without delay. Furthermore, the time required to generate a status report is constant irrespective of the characteristics of the test result. Thus, any real time requirements can be met.

According to one embodiment of this aspect of the invention, the input interface is adapted to receive at least one state indicator, which for each test in the set of tests reflects whether or not the test has been completed. The processing unit is adapted to generate the status report on the further basis of the state indicator. Hence, it can be determined whether continued testing might alter the currently reported status. It is especially advantageous to include such a readiness parameter in the present solution because this only adds minor extra complexity to the proposed simplified Boolean functions, whereas in the prior-art solutions, addition of an equivalent readiness parameter would have caused a dramatic complexity increase.

According to another embodiment of this aspect of the invention, the state indicator, in combination with the test result, for each test in the set of tests, reflects one of the following: a first state indicating that the test is not yet completed; a second state indicating that the test has been completed with no detected faults; and a third state indicating that the test has been completed with at least one detected fault. Thereby, the processing unit may include valuable supplementary data in the status reports produced.

According to yet another embodiment of this aspect of the invention, the health status for a given component reflects one of the following statuses: a non-faulty status; a suspected fault status; and a confirmed fault status. Hence, the status report may also indicate an unconfirmed condition representing a status between error-free and definitely faulty.

According to still another embodiment of this aspect of the invention, it is assumed that each of said components is associated with a plurality of behavioral modes. The plurality of behavioral modes include a non-faulty mode and at least two of the following fault modes: faulty, unknown fault, gain fault, bias fault, positive bias, negative bias, open circuit fault and short circuit fault. The processing unit is further adapted to generate the status report, such that the report is capable of specifying a respective status for all applicable combinations of said components and said plurality of behavioral modes. The applicable combinations are here given by each component of said components and the specific behavioral modes associated with this component. Consequently, the status report may reflect specific types of faults, and as a result, a repair technician can be aided regarding appropriate measures to take other than simply replacing the faulty component.

According to a further embodiment of this aspect of the invention, the processing unit is adapted to generate the status report such that, for each of said components not being associated with the non-faulty mode, (i.e. being associated with at least one of said fault modes), the status report reflects the suspected fault status in respect of at least one component, or the confirmed fault status in respect of exactly one component. Again, this is desirable because the degree of accuracy of the diagnosis thereby improves.

According to yet another embodiment of this aspect of the invention, the processing unit is adapted to generate the status report such that readiness information in respect of each of said components is included therein. The readiness information for a component indicates a final value, and the health status is said to be ready, if no additional testing of the component is expected to alter the component's present health status. Analogously, the readiness information indicates a non-final value if additional testing of the component may produce test results that alter the component's present health status. Thus, a repair technician is provided with a valuable tool for testing and servicing the entity in an efficient manner.

According to another aspect of the invention, the object is achieved by a motor vehicle consisting of a plurality of components. The vehicle has a diagnosis system, which is adapted to estimate a respective status of at least a sub-group of said components. This diagnosis system, in turn, includes the above-proposed online diagnosis engine.

According to another aspect of the invention, the object is achieved by the method described initially, wherein the status report is generated in real time based on the test results currently available on the input interface. The status report is here generated by means of simplified Boolean functions representing a truth-table of all possible combinations of test results and their status reports.

The advantages of this method, as well as the preferred embodiments thereof, are apparent from the discussion hereinabove with reference to the proposed diagnosis engine.

According to a further aspect of the invention the object is achieved by a computer program loadable into the internal memory of a computer, comprising software for controlling the above proposed method when said program is run on a computer.

According to another aspect of the invention the object is achieved by a computer program product, having a program recorded thereon, where the program is to make a computer control the above proposed method.

### BRIEF DESCRIPTION OF THE DRAWINGS

The present invention is now to be explained more closely by means of embodiments, which are disclosed as examples, and with reference to the attached drawings.
- Figure 1: shows a block diagram over an online diagnosis engine according to one embodiment of the invention,
- Figures 2a, b: illustrate how an original data set representing a truth-table of test results and diagnoses may be split up into independent groups of sub-data sets,
- Figure 3: schematically depicts a motor vehicle equipped with the proposed online diagnosis engine, and
- Figure 4: shows a flow diagram illustrating the general method according to the invention.

### DESCRIPTION OF EMBODIMENTS OF THE INVENTION

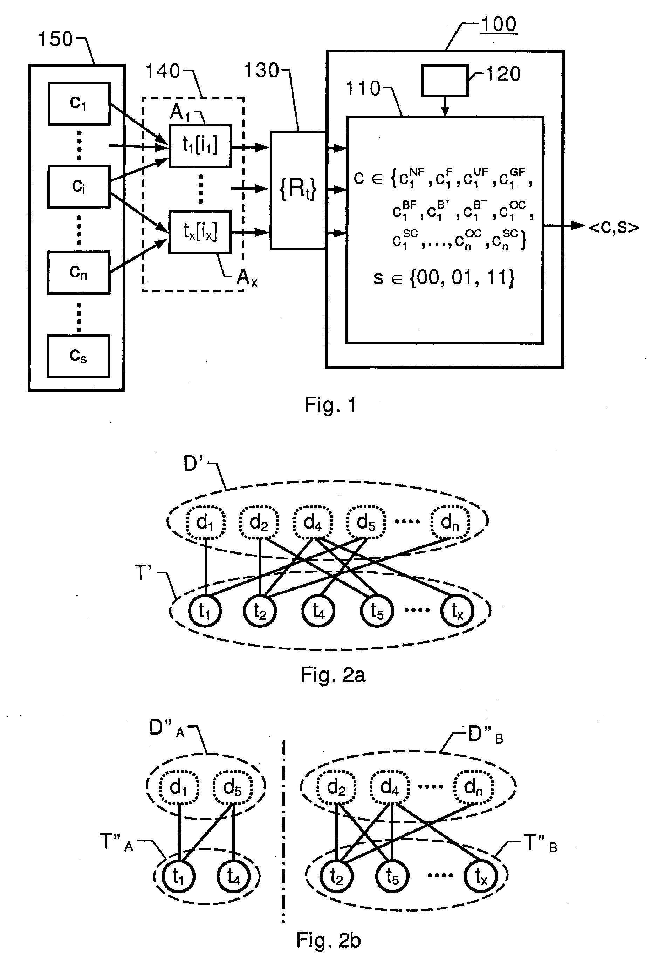

We refer initially to Figure 1 showing a block diagram over an online diagnosis engine 100 according to one embodiment of the invention. Figure 1 also shows an entity 150 whose status is to be estimated. The entity 150 includes a plurality of components c₁ to cₛ, which each is assumed to have a health status s. At least a subset c₁ to cₙ of the components c₁ to cₛ are tested by means of a set of tests t₁ to tₓ (here collectively denoted 140). As mentioned earlier, one or more ECUs A₁ to Aₓ may execute the tests 140, and thus produce result data {Rₜ}.

The online diagnosis engine 100 is adapted to execute a fault isolation algorithm, i.e. to derive a status report <c,s> based on the result data {Rₜ}. To this aim, the online diagnosis engine 100 includes an input interface 130 and a processing unit 110. The input interface 130 is adapted to receive any currently available results {Rₜ} of the tests t₁ to tₓ in respect of the subset of components c₁ to cₙ, and forward the test results {Rₜ} to the processing unit 110. The processing unit 110, in turn, is adapted to generate the status report <c,s> based on the test results {Rₜ}. This report <c,s> reflects a functional quality of each of the tested components c₁ to cₙ.

Specifically, the processing unit 110 implements simplified Boolean functions, which represents a truth-table of all possible combinations of test results {Rₜ} and their status report <c,s>. Of course, for a typical implementation e.g. wherein the entity 150 is represented by a motor vehicle, the truth-table of all possible combinations of test results {Rₜ} and their status report <c,s> is normally very large. Therefore, the truth-table as such is not practically usable for deriving the status report. Nevertheless, simplified Boolean functions *representing* the truth-table may be made very compact indeed. I.e. in the simplified Boolean functions all, or at least many, of the redundancies in the truth-table have been removed. Thus, executing such functions is suitable for real-time implementation. Strategies for accomplishing the proposed simplified Boolean functions will be discussed in detail below. First, however, we will describe further aspects of the on-line diagnosis engine 100.

According to one embodiment of the invention, a respective state indicator [i₁], ..., [iₓ] is associated with each test in the set of tests t₁, ..., tₓ. The state indicators [i₁], ..., [iₓ] reflect whether or not the individual tests have been completed. This means that a first state indicator [i₁] indicates the completeness of a first test t₁, a second test, and so on, up to a last state indicator [iₓ] for a last test tₓ in the set of tests t₁, ..., tₓ. Depending on the respective completeness and outcome of the tests, the state indicators [i₁], ..., [iₓ] preferably reflect one out of three states for each test in the set of tests t₁, ..., tₓ. Here, a first state indicates that the test is not yet completed; a second state indicates that the test has been completed with no detected faults; and a third state indicates that the test has been completed with at least one detected fault. In this embodiment, the input interface 130 is adapted to receive the state indicators [i₁], ..., [iₓ], preferably or in combination with the test results {Rₜ}, and forward these state indicators [i₁], ..., [iₓ] to the processing unit 110. This unit 110, in turn, is adapted to generate the status report <c,s> on the further basis of the state indicator [i₁], ..., [iₓ]. Thus the status report <c,s> indicates unconfirmed statuses for the components c₁, ..., cₙ, which are tested by yet uncompleted tests. For example, in the status report <c,s> the health status s for a given component may reflect: a non-faulty status, symbolized with 00 in Figure 1, a suspected fault status symbolized with 01 in Figure 1, or a confirmed fault status symbolized with 11 in Figure 1.

According to another embodiment of the invention, each of the tested components c₁, ..., cₙ is assumed to be associated with a plurality of behavioral modes. These modes include a non-faulty mode NF, and depending on the characteristics of the component, at least two of the following fault modes: faulty *F*, unknown fault *UF,* gain fault *GF,* bias fault *BF,* positive bias *B⁺*, negative bias *B⁻*, open circuit fault *OC* and short circuit fault SC. Moreover, the processing unit 110 is adapted to generate the status report <c,s>, such that the report specifies a respective status for all applicable combinations of the tested components c₁, ..., cₙ and the plurality of behavioral modes *NF, F, UF, GF, BF, B⁺, B⁻*, *OC* or *SC.* By an applicable combination is here understood the behavioral modes associated with the component in question.

Hence, in this embodiment, the processing unit 110 is preferably adapted to generate the status report <c,s> in such a manner that the report is capable of specifying, for each of combination of tested component c₁, ..., cₙ and each fault mode (e.g. *F, UF, GF, BF, B⁺*, *B⁻*, *OC* or *SC*) associated thereto, whether this mode has the suspected fault status 01, or the confirmed fault status 11. Naturally, if the component has the non-faulty status 00, no other behavioral modes need to be reported in respect of this component. Analogously, if one of the fault modes for a given component is associated with the confirmed fault status 11, the status report <c,s> need not include information pertaining to any other behavioral modes for this component. However, if at least one fault mode of a component is associated with the suspected fault status 01, the status report reflects the suspected fault status 01 for each of these applicable fault modes in respect of this component. Thereby, the status report <c,s> may be provided with very rich information, which is especially valuable for a service technician handling the entity 150.

Furthermore, the online diagnosis engine 100 preferably includes, or is associated with, a computer readable medium 120 (e.g. a memory module) having a program recorded thereon, where the program is adapted to make the processing unit 110 control the steps of above-described procedure.

Now, we will elaborate upon how the proposed simplified Boolean functions are obtainable, which represents the truth-table of all possible combinations of test results {Rₜ} and their status reports <c,s>, being implemented by the processing unit 110.

According to the invention, a three-step off-line approach is applied to handle the inherently complex task of producing the proposed simplified Boolean functions that are adapted to diagnose a particular entity containing a large number of components.

Initially, all theoretically possible input signals in the form of test results {Rₜ} are defined and listed in a truth-table. An offline process then computes minimal-cardinality diagnoses for each of these test results {Rₜ}. Naturally, for large numbers of tests t₁, ..., tₓ, the truth-table becomes extremely large. Consequently, computing the minimal-cardinality diagnoses may be a very processing-heavy task. This, however, is not problematic because the minimal-cardinality diagnoses need only be formulated once. Moreover, the processing is performed offline, so there is no time requirement to meet.

Then, a second step derives a status report for each set of minimal-cardinality diagnoses. Also this step is executed off-line.

Finally, in a third off-line step, the simplified Boolean functions are derived based on the status reports produced in the second step. Specifically, there is one resulting Boolean function per column in the truth-table. Here, the simplified Boolean functions constitute a "knowledgebase" of all the minimal-cardinality diagnoses in the truth-table, and as indicated earlier, this knowled-gebase can generally be made very compact and efficient to use by the processing unit 110 in the above-described online implementation.

In order to explain this second step, we will refer to a simple example. Assume that four components of an entity are to be tested by means of four tests t₁, t₂, t₃ and t₄. The tests here respond to potential faults in four components c₁, c₂, c₃ and c₄ according to the below truth-table:

| | c₁ | c₂ | c₃ | c₄ |
|---|---|---|---|---|
| t₁ | X | 0 | 0 | X |
| t₂ | X | X | 0 | 0 |
| t₃ | 0 | X | X | 0 |
| t₄ | 0 | X | 0 | 0 |

where X at a position (tᵢ, cⱼ) symbolizes that the test tᵢ *may* respond to a fault in the component cⱼ.

Further assume that each component only has two fault modes, i.e. non-faulty and faulty respectively. However, as is apparent from the truth-table there is not a one-to-one relationship between the tests t₁, t₂, t₃ and t₄ and the tested components. Hence, the health status determined for a given component may be non-faulty 00, suspected faulty 01 or confirmed faulty 11 depending on which test(s) that has/have reacted.

Given the above health statuses 00, 01 and 11 respectively, the truth-table below is applicable to the possible combinations of the results {Rₜ} of the tests t₁, t₂, t₃ and t₄.

| tests | | | | minimal-cardinality diagnoses | status reports | | | |
|---|---|---|---|---|---|---|---|---|
| t₁ | t₂ | t₃ | t₄ | | C₁ | C₂ | C₃ | C₄ |
| 0 | 0 | 0 | 0 | {{ }} | 00 | 00 | 00 | 00 |
| 0 | 0 | 0 | 1 | {{c₂}} | 00 | 11 | 00 | 00 |
| 0 | 0 | 1 | 0 | {{c₂}, {c₃}} | 00 | 10 | 10 | 00 |
| 0 | 0 | 1 | 1 | {{c₂}} | 00 | 11 | 00 | 00 |
| 0 | 1 | 0 | 0 | {{c₁}, {c₂}} | 10 | 10 | 00 | 00 |
| 0 | 1 | 0 | 1 | {{c₂}} | 00 | 11 | 00 | 00 |
| 0 | 1 | 1 | 0 | {{c₂}} | 00 | 11 | 00 | 00 |
| 0 | 1 | 1 | 1 | {{c₂}} | 00 | 11 | 00 | 00 |
| 1 | 0 | 0 | 0 | {{c₁}, {c₄}} | 10 | 00 | 00 | 10 |
| 1 | 0 | 0 | 1 | {{c₁, c₂}, {c₂, c₄}} | 10 | 11 | 00 | 10 |
| 1 | 0 | 1 | 0 | {{c₁, c₂}, {c₁, c₃}, {c₂, c₄}, {c₃, c₄}} | 10 | 10 | 10 | 10 |
| 1 | 0 | 1 | 1 | {{c₁, c₂}, {c₂, c₄}} | 10 | 11 | 00 | 10 |
| 1 | 1 | 0 | 0 | {{c₁}} | 11 | 00 | 00 | 00 |
| 1 | 1 | 0 | 1 | {{c₁, c₂}, {c₂, c₄}} | 10 | 11 | 00 | 10 |
| 1 | 1 | 1 | 0 | {{c₂, c₄}, {c₁, c₂}, {c₁, c₃}} | 10 | 10 | 10 | 10 |
| 1 | 1 | 1 | 1 | {{c₂, c₄}, {c₁, c₂}} | 10 | 11 | 00 | 10 |

In the above truth-table, the minimal-cardinality diagnoses on each line are represented by a set (denoted { }) of diagnoses (also represented by sets denoted { }) that explain the respective status report. For example, the tenth line specifies that the tests t₁ and t₄ have responded. This can be explained by faults in the components c₁ and c₂ (i.e. a first explanation), or by faults in the components c₂ and c₄ (i.e. a second explanation).

Moreover, the eight rightmost columns, representing the status reports, can be compacted into simplified Boolean functions by means of a hazard-free logic minimization process, for instance by applying the so-called Quine-McCluskey method. As a result, the following logic equations are obtained with respect to the tests t₁, t₂, t₃ and t₄:
column 1 = x100 *OR* 1 xxx,
column 2 = 1100,
column 3 = 01 xx *OR* xxx1 *OR* 1 xxx,
column 4 = 011x *OR* xxx1,
column 5 = x010 *OR* 1x10
column 6 = 0,
column 7 = 1xx1 *OR* 1 x1 x *OR* 1 xxx, and
column 8 = 0,
where for a test tᵢ, i ∈ {1,2,3,4}:
x symbolizes that the test tᵢ has no effect,
0 symbolizes no response in the test tᵢ, and
1 symbolizes response in the test.
Alternatively, the above logic equations may be expressed in a standard Boolean format as:
column 1: t₂∧¬t₃∧¬t₄ ∨ t₁,
column 2: t₁∧t₂,
column 3: ¬t₁∧t₂ ∨ t₄ ∨ t₃,
column 4: ¬t₁∧t₂∧t₃ ∨ t₄,
column 5: ¬t₂∧t₃∧t₄ ∨ t₁∧t₃∧¬t₄,
column 6: *FALSE,*
column 7: t₁∧t₄ ∨ t₁∧t₃ ∨ t₁∧¬t₂, and
column 8: *FALSE.*

Furthermore, as mentioned earlier, state indicators [i₁], ..., [iₓ] can be generated, which reflect whether or not the individual tests have been completed. Hence, the health status together with readiness information for a given component can be jointly represented by means of the following 3-bit coding scheme:
- 000: not faulty, not ready;
- 001: not faulty, ready;
- 010: suspected faulty, not ready;
- 011: suspected faulty, ready;
- 100: confirmed faulty, not ready; and
- 101: confirmed faulty, ready.

According to one embodiment of the invention, the status report includes readiness information that is associated to each tested component. This information reflects whether or not further testing of the component may change the component's current health status s. Specifically, the readiness information for a component indicates a final value (i.e. *ready*) if no additional testing of the component is expected to alter the component's present health status s; while a non-final value (i.e. *not ready*) is indicated if additional testing of the component may produce test results {Rₜ} that alter the component's present health status s.

The below truth-table shows an example of how these statuses can be used to describe the relationships between a pair of tests t₅ and t₆ in respect of three components c₅, c₆ and c₇ and their status reports.

| tests | | minimal-cardinality diagnoses | status reports | | |
|---|---|---|---|---|---|
| t₅ | t₆ | | c₅ | c₆ | c₇ |
| 0 | 0 | {{ }} | 000 | 000 | 000 |
| 0 | 1 | {{ }} | 000 | 000 | 001 |
| 0 | 2 | {{c₆, c₇}} | 001 | 010 | 010 |
| 1 | 0 | {{ }} | 001 | 000 | 000 |
| 1 | 1 | {{ }} | 001 | 001 | 001 |
| 1 | 2 | {{c₆, c₇}} | 001 | 011 | 011 |
| 2 | 0 | {{c₅, c₆}} | 010 | 010 | 001 |
| 2 | 1 | {{c₅, c₆}} | 011 | 011 | 001 |
| 2 | 2 | {{c₆}} | 001 | 101 | 001 |

where in the test results t₅ and t₅:
- 0: designates not completed,
- 1: designates completed with no detected faults, and
- 2: designates completed with detected faults.

According to the invention, it is irrelevant exactly how the simplified Boolean functions are produced, which represents the truth-table of all possible combinations of test results {Rₜ} and their status reports. Hence, as alternatives to the above-mentioned Quine-McCluskey method, BDD methods (BDD = Binary Decision Diagram), Karnaugh maps, or strategies based on ESPRESSO II (with all its variants i.e. ESPRESSO-SIGNATURE, ESPRESSOEXACT etc.) may be used.

Moreover, to reduce the complexity of the process used to derive the simplified Boolean functions representing the truth-table, various policies to structure the inputs (i.e. results {Rₜ} of the tests t₁,..., tₓ) may be applied.

In a typical vehicle ECU, the order of 500 diagnostic tests may be used to detect around 400 different types of faults. As mentioned earlier, one test may investigate multiple components, however, the maximum number of faults sensed by a single test is normally limited to approximately 20.

One straightforward solution to create a single global decision structure is to list all diagnostic tests in a row-wise manner, wherein each test is associated with its respective faults represented in columns. An X, or equivalent symbol, here denotes a relationship between a particular test and its possible faults. However, unfortunately, a single global decision structure may be impractical.

The total number of input combinations necessary to supply to the first step of the above-mentioned off-line approach in order to obtain a complete set of status reports is at least 2", where n is the total number of diagnostic tests in an underlying decision structure. Hence, for large numbers of tests, the number of unique possible combinations becomes enormous. Therefore, a brute force complexity reduction may require unrealistic temporal and spatial resources.

To alleviate this problem, intelligent grouping of data sets is recommended. This means that particular algorithms can be exploited to intelligently split the available data set into independent groups, or sub-data sets. The criterion for a given diagnostic test to become a member of such a split group of diagnostic tests is whether the test is connected to other members of the tests in the group. Here, graph theory is preferably used to determine whether there is a connection between a particular test and any previously investigated test or combination of tests.

Figures 2a and b illustrate such a split into independent groups of sub-data sets. In Figure 2a a so-called bipartite graph is shown, which represents an original set T' of tests t₁, .... tₓ and an original set D' of faults d₁, ..., dₙ related thereto. The relationships are here symbolized by means of lines interconnecting the tests t₁, ..., tₓ and the faults d₁, ..., dₙ. A bipartite graph, or bigraph, is formed by splitting a vertex set of a graph into vertices, such that no two vertices from the same set are adjacent to one another. In Figure 2b the tests t₁, ..., tₓ and faults d₁, ..., dₙ have been structured to identify groups of tests and faults. Hence, it becomes apparent that a first set T"_{A} of tests t₁ and t₄ and a corresponding first set D"_{A} of faults d₁ and d₅ are completely separate from a second set T"_{B} of tests t₂, t₅ up to tₓ and a corresponding second set D"_{B} of faults d₂, d₄ up to dₙ. Hence, subsequent simplification procedures can be applied separately to the first and second sets T"_{A} and T"_{B} respectively to reduce the equivalent truth-tables. For large truth-tables, this type of split-up may reduce the complexity of the simplification procedure considerably.

To handle the complexity of large truth-tables, it is preferable to apply intelligent group reduction techniques for obtaining groups of truth-tables having reduced sizes. For example, duplicate rows and tests having single "X:s" may be used in this reduction.

Duplicate rows, or multiple row copies, can efficiently be represented by a single row. I.e. any additional copies of a row are simply eliminated by removing the relevant tests from the group of tests. Naturally, this reduces the group size. Moreover, the reduction results in a smaller number of combinations required to be evaluated in the off-line computation of the status reports, which in turn, results in an improved temporal and spatial efficiency. It is important though, that any eliminated diagnostic tests be incorporated into the final results, which otherwise would become inconsistent. Hence, the process may be regarded as a packing and unpacking of a group in order to achieve spatial and temporal efficiency regarding the off-line computation.

The presence of rows containing a single "X" under a specific diagnosis, represent another source of simplification. Namely, all such rows can be removed completely from the truth-table provided that these rows are reinstated after that the logic equations for the specific diagnoses which they represent have been derived. Generally, a very efficient group size reduction can be achieved by exploiting this approach.

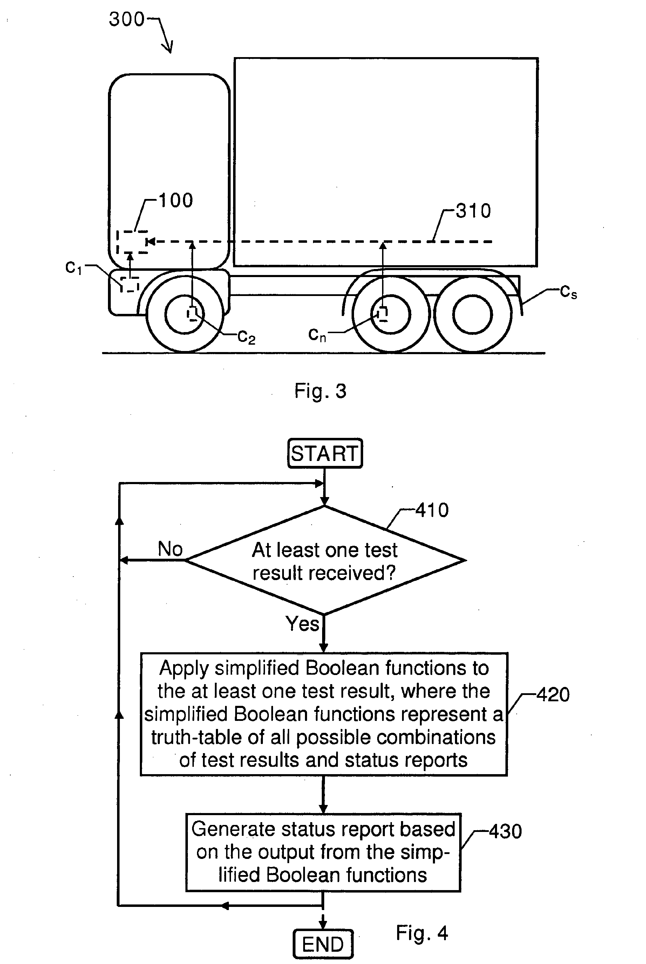

Figure 3 schematically depicts a motor vehicle 300 being equipped with the proposed online diagnosis engine 100. Specifically, the vehicle 300 includes a number of components c₁, c₂, ..., cₙ, ..., cₛ and a diagnosis system, which is adapted to estimate a status of at least a sub-group of its components (and possibly their behavioral modes), say c₁, ..., cₙ. The online diagnosis engine 100, in turn, is included in the diagnosis system. Preferably, this online diagnosis engine 100 is implemented in an ECU and test results in respect of one or more of the components in said sub-group c₁, ..., cₙ may be delivered to the online diagnosis engine 100 via a data bus 310, e.g. adapted to the CAN format (CAN = Controller Area Network). However, the data bus 310 may equally well be adapted to any other standard, such as Time Triggered CAN (TTCAN), FlexRay, Media Oriented System Transport (MOST) or ByteFlight. These standards all represent efficient means of accomplishing networks in trucks, busses and other motor vehicles. By interconnecting various control units of a vehicle via a network, a very large number of vehicle functions may be accomplished based on relatively few ECUs. Namely, by combining resources from two or more ECUs a flexible and cost efficient over-all vehicular design is obtained.

The test results may equally well be generated in the same ECU as the ECU in which the proposed diagnosis engine is implemented. Naturally, in such a case, the test results do not need to be sent via an external data bus.

In order to sum up, the general method of diagnosing an entity including a plurality of components according to the invention will be described below with reference to the flow diagram in figure 4.

A first step 410 checks whether or not at least one updated test result has been received, and if so a step 420 follows. Otherwise, the procedure loops back and stays in the step 410.

The step 420 applies, for each component (and possibly each behavioral mode associated thereto) simplified Boolean functions to the at least one test result. The simplified Boolean functions represent a truth-table of all possible combinations of test results and their status reports. Subsequently, a step 430 generates a status report reflecting a functional quality of each tested component of the entity.

Finally, the procedure either ends, or loops back to the step 410 (i.e. is ongoing testing/diagnosing of the entity is desired).

The process steps, as well as any sub-sequence of steps, described with reference to the figure 4 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code; object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal, which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. An online diagnosis engine (100) for estimating a status of an entity (150, 300) with a plurality of components (c₁, ..., cₙ) which each is assumed to have a health status (s), the online diagnosis engine (100) comprising:
an input interface (130) adapted to receive results ({Rₜ}) of a set of tests (t₁, ..., tₓ) in respect of the components (c₁, ..., cₙ), and
a processing unit (110) adapted to generate a status report (<c,s>) based on the test results ({Rₜ}), the status report (<c,s>) reflecting a functional quality of each of said components (c₁, ..., cₙ), **characterized in that**
the processing unit (110) implements simplified Boolean functions representing a truth-table of all possible combinations of test results ({Rₜ}) and their status reports (<c,s>), and the processing unit (110) is adapted to generate the status report (<c,s>) in real time based on the test results ({Rₜ}) currently available on the input interface (130), and
the input interface (130) is adapted to receive at least one state indicator ([i₁], ..., [iₓ]) which for each test in the set of tests (t₁, ..., tₓ) reflects whether or not the test has been completed, and the processing unit (110) is adapted to generate the status report (<c,s>) on the further basis of the state indicator ([i₁], ..., [iₓ]).

2. The online diagnosis engine (100) according to claim 1, wherein the state indicator ([i₁], ...; [iₓ]), in combination with the test result ({Rₜ}), for each test in the set of tests (t₁, ..., tₓ), reflects one of:
a first state indicating that the test is not yet completed,
a second state indicating that the test has been completed with no detected faults, and
a third state indicating that the test has been completed with at least one detected fault.

3. The online diagnosis engine (100) according to any one of the preceding claims, wherein the health status (s) for a given component reflects one of:
a non-faulty status (00),
a suspected fault status (01), and
a confirmed fault status (11).

4. The online diagnosis engine (100) according to any one of the preceding claims, wherein each of said components (c₁, ..., cₙ), is assumed to be associated with a plurality of behavioral modes including a non-faulty mode (*NF*) and at least two of the following fault modes: faulty (*F*), unknown fault (*UF*), gain fault (*GF*), bias fault (*BF*), positive bias (*B*⁺), negative bias (*B*⁻), open circuit fault (OC) and short circuit fault (*SC*), and the processing unit (110) is adapted to generate the status report (<c,s>) such that the report is capable of specifying a respective status for all applicable combinations of said components (c₁, ..., cₙ) and said plurality of behavioral modes (*NF, F, UF, GF, BF, B*⁺*, B*⁻, OC, SC), the applicable combinations being given by each component of said components (c₁, ..., cₙ) and the plurality of behavioral modes associated with this component.

5. The online diagnosis engine (100) according to claim 4 when dependent of claim 4, wherein the processing unit (110) is adapted to generate the status report (<c,s>) such that, for each of said components (c₁, ..., cₙ) and at least one of said fault modes *(F, UF, GF, BF, B*⁺*, B*⁻, OC, SC) associated thereto, the status report (<c,s>) reflects the suspected fault status (01) in respect of at least one of said fault modes (*F, UF, GF, BF, B*⁺*, B*⁻, *OC*, *SC*) or the confirmed fault status (11) in respect of exactly one of said fault modes (*F, UF, GF, BF, B*⁺*, B*⁻, *OC, SC*).

6. The online diagnosis engine (100) according to any one of the preceding claims, wherein the processing unit (110) is adapted to generate the status report (<c,s>) such that readiness information in respect of each of said components (c₁, ..., cₙ) is included therein, the readiness information for a component indicating:
a final value if no additional testing of the component is expected to alter the component's present health status (s), and
a non-final value if additional testing of the component may produce test results ({Rₜ}) that alter the component's present health status (s).

7. A motor vehicle (300) consisting of a plurality of components (c₁, ..., cₙ, ..., cₛ), the vehicle (300) having a diagnosis system adapted to estimate a respective status (s) of at least a sub-group (c₁, ..., cₙ) of said components, wherein the diagnosis system comprises the online diagnosis engine (100) according to any one of the claims 1 to 7.

8. A method of estimating a status of an entity (150, 300) with a plurality of components (c₁, ..., cₙ) which each is assumed to have a health status (s), the method comprising:
receiving results ({Rₜ}) of a set of tests (t₁, ..., tₓ) in respect of the components (c₁, ..., cₙ) via an input interface (130), and
generating a status report (<c,s>) based on the test results ({Rₜ}), the status report (<c,s>) reflecting a functional quality of each of said components (c₁, ..., cₙ), **characterized by:**
generating the status report (<c,s>) in real time based on the test results ({Rₜ}) currently available on the input interface (130), the status report (<c,s>) being generated by means of simplified Boolean functions representing a truth-table of all possible combinations of test results ({Rₜ}) and their status reports (<c,s>),
receiving at least one state indicator ([i₁], ..., [iₓ]) which for each test in the set of tests (t₁, ..., tₓ) reflects whether or not the test has been completed, and
generating the status report (<c,s>) on the further basis of the state indicator ([i₁], ..., [iₓ]).

9. The method according to claim 8, wherein the state indicator ([i₁], ...; [iₓ]), in combination with the test result ({Rₜ}), for each test in the set of tests (t₁, ..., tₓ), reflects one of:
a first state indicating that the test is not yet completed,
a second state indicating that the test has been completed with no detected faults, and
a third state indicating that the test has been completed with at least one detected fault.

10. The method according to any one of the claims 8 or 9, wherein the health status (s) for a given component reflects one of:
a non-faulty status (00),
a suspected fault status (01), and
a confirmed fault status (11).

11. The method according to any one of the claims 8 to 10, wherein each of said components (c₁, ..., cₙ), is assumed to be associated with a plurality of behavioral modes including a non-faulty mode (NF) and at least two of the following fault modes: faulty (*F*), unknown fault (*UF*), gain fault (*GF*), bias fault (*BF*)*,* positive bias (*B*⁺), negative bias (*B*⁻), open circuit fault (*OC*) and short circuit fault (*SC*), and the method comprises generating the status report (<c,s>) such that the report is capable of specifying a respective status for all applicable combinations of said components (c₁, ..., cₙ) and said plurality of behavioral modes *(NF, F, UF, GF, BF, B*⁺, *B*⁻, *OC, SC),* the applicable combinations being given by each component of said components (c₁, ..., cₙ) and the plurality of behavioral modes associated with this component.

12. The method according to claim 11 when dependent of claim 10, wherein the method comprises generating the status report (<c,s>) such that, for each of said components (c₁, ..., cₙ) and at least one of said fault modes (*F*, *UF, GF, BF, B*⁺, *B*⁻, *OC,* SC) associated thereto, the status report (<c,s>) reflects the suspected fault status (01) in respect of at least one of said fault modes (*F*, *UF, GF, BF, B*⁺, *B*⁻, *OC, SC)* or the confirmed fault status (11) in respect of exactly one of said fault modes (*F*, *UF, GF, BF, B*⁺, *B*⁻, *OC*, *SC*).

13. The method according to any one of the claims 8 to 12, wherein the method comprises generating the status report (<c,s>) such that readiness information in respect of each of said components (c₁, ..., cₙ) is included therein, the readiness information for a component indicating:
a final value if no additional testing of the component is expected to alter the component's present health status (s), and
a non-final value if additional testing of the component may produce test results ({Rₜ}) that alter the component's present health status (s).

14. A computer program loadable into the internal memory of a computer, comprising software for controlling the steps of any of the claims 8 to 13 when said program is run on the computer.

15. A computer program product (120), having a program recorded thereon, where the program is to make a computer control the steps of any of the claims 8 to 13.

## Patentansprüche

1. Online-Diagnosemaschine (100) zum Ermitteln eines Zustands einer Einheit (150, 300) mit mehreren Komponenten (c₁, ..., cₙ), von denen angenommen wird, dass jede einen Funktionszustand (s) aufweist, wobei die Online-Diagnosemaschine (100) umfasst:
eine Eingabeschnittstelle (130), die dazu eingerichtet ist, Ergebnisse ({Rₜ}) eines Satzes von Prüfungen (t₁, ..., tₓ) bezüglich der Komponenten (c₁, ..., cₙ) zu empfangen, und
eine Verarbeitungseinheit (110), die dazu eingerichtet ist, basierend auf den Prüfungsergebnissen ({Rₜ}) einen Zustandsbericht (<c,s>) zu erzeugen, wobei der Zustandsbericht (<c,s>) eine Funktionseigenschaft jeder der Komponenten (c₁, ..., cₙ) darstellt,
**dadurch gekennzeichnet, dass**
die Verarbeitungseinheit (110) vereinfachte Boole'sche Funktionen ausführt, die eine Wahrheitstabelle aller möglichen Kombinationen der Prüfungsergebnisse ({Rₜ}) und deren Zustandsberichte (<c,s>) repräsentieren, und die Verarbeitungseinheit (110) dazu eingerichtet ist, den Zustandsbericht (<c,s>) in Echtzeit basierend auf den gegenwärtig an der Eingabeschnittstelle (130) verfügbaren Prüfungsergebnissen ({Rₜ}) zu erzeugen, und
die Eingabeschnittstelle (130) dazu eingerichtet ist, zumindest eine Zustandsangabe ([i₁], ..., [iₓ]) zu empfangen, die für jede Prüfung in dem Satz von Prüfungen (t₁, ..., tₓ) darstellt, ob oder ob nicht die Prüfung abgeschlossen worden ist, und die Verarbeitungseinheit (110) dazu eingerichtet ist, den Zustandsbericht (<c,s>) außerdem basierend auf der Zustandsangabe ([i₁], ..., [iₓ]) zu erzeugen.

2. Online-Diagnosemaschine (100) nach Anspruch 1,
wobei die Zustandsangabe ([i₁], ..., [iₓ]) in Kombination mit dem Prüfungsergebnis ({R₁}) für jede Prüfung in dem Satz von Prüfungen (t₁, ..., tₓ) darstellt:
einen ersten Zustand, der angibt, dass die Prüfung noch nicht abgeschlossen ist,
einen zweiten Zustand, der angibt, dass die Prüfung ohne erkannte Fehler abgeschlossen worden ist, oder
einen dritten Zustand, der angibt, dass der Test mit zumindest einem erkannten Fehler abgeschlossen worden ist.

3. Online-Diagnosemaschine (100) nach einem der vorangehenden Ansprüche, wobei der Funktionszustand (s) für eine bestimmte Komponente
einen fehlerfreien Zustand (00),
einen Zustand (01) mit vermutetem Fehler oder
einen Zustand (11) mit bestätigtem Fehler
darstellt.

4. Online-Diagnosemaschine (100) nach einem der vorangehenden Ansprüche, wobei von jeder der Komponenten (c₁, ..., cₙ) angenommen wird, dass sie mit mehreren Verhaltensarten einschließlich einer fehlerfreien Art (NF) und zumindest zwei der folgenden Fehlerarten verknüpft ist: fehlerhaft (F), unbekannter Fehler (UF), Verstärkungsfehler (GF), Vorspannungsfehler (BF), positive Vorspannung (B⁺), negative Vorspannung (B⁻), Offenkreisfehler (OC) und Kurzschlussfehler (SC), und wobei die Verarbeitungseinheit (110) dazu eingerichtet ist, den Zustandsbericht (<c,s>) derart zu erzeugen, dass der Bericht geeignet ist, einen jeweiligen Zustand für alle anwendbaren Kombinationen der Komponenten (c₁, ..., cₙ) und der Mehrzahl an Verhaltensarten (NF, F, UF, GF, BF, B⁺, B⁻, OC, SC) anzugeben, wobei die anwendbaren Kombinationen von jeder Komponente der Komponenten (c₁, ..., cₙ) und der Mehrzahl mit dieser Komponente verknüpfter Verhaltensarten vorgegeben sind.

5. Online-Diagnosemaschine (100) nach Anspruch 4,
wobei die Verarbeitungseinheit (110) dazu eingerichtet ist, den Zustandsbericht (<c,s>) derart zu erzeugen, dass der Zustandsbericht (<c,s>) für jede der Komponenten (c₁, ..., cₙ) und zumindest eine der damit verknüpften Fehlerarten (F, UF, GF, BF, B⁺, B⁻, OC, SC) den Zustand (01) mit vermutetem Fehler bezüglich zumindest einer der Fehlerarten (F, UF, GF, BF, B⁺, B⁻, OC, SC) oder den Zustand (11) mit bestätigtem Fehler bezüglich genau einer der Fehlerarten (F, UF, GF, BF, B⁺, B⁻, OC, SC) darstellt.

6. Online-Diagnosemaschine (100) nach einem der vorangehenden Ansprüche, wobei die Verarbeitungseinheit (110) dazu eingerichtet ist, den Zustandsbericht (<c,s>) derart zu erzeugen, dass eine Bereitschaftsinformation bezüglich jeder der Komponenten (c₁, ..., cₙ) darin enthalten ist, wobei die Bereitschaftsinformation für eine Komponente angibt:
einen Endwert, wenn von keiner weiteren Prüfung der Komponente erwartet wird, dass sie den gegenwärtigen Funktionszustand (s) der Komponente verändert, und
einen nichtendgültigen Wert, wenn eine weitere Prüfung der Komponente Prüfungsergebnisse ({Rₜ}) erzeugen kann, die den gegenwärtigen Funktionszustand (s) der Komponente verändern.

7. Kraftfahrzeug (300) bestehend aus mehreren Komponenten (c₁, ..., cₙ, ..., cₛ), wobei das Fahrzeug (300) ein Diagnosesystem aufweist, das dazu eingerichtet ist, einen jeweiligen Zustand (s) zumindest einer Untergruppe (c₁, ..., cₙ) der Komponenten zu ermitteln, wobei das Diagnosesystem die Online-Diagnosemaschine (100) nach einem der Ansprüche 1 bis 6 umfasst.

8. Verfahren zum Ermitteln eines Zustands einer Einheit (150, 300) mit mehreren Komponenten (c₁, ..., cₙ), von denen angenommen wird, dass jede einen Funktionszustand (s) aufweist, wobei das Verfahren umfasst:
Empfangen von Ergebnissen ({Rₜ}) eines Satzes von Prüfungen (t₁, ..., tₓ) bezüglich der Komponenten (c₁, ..., cₙ) über eine Eingabeschnittstelle (130) und
Erzeugen eines Zustandsberichts (<c,s>) basierend auf den Prüfungsergebnissen ({Rₜ}), wobei der Zustandsbericht (<c,s>) eine Funktionseigenschaft jeder der Komponenten (c₁, ..., cₙ) darstellt,
**gekennzeichnet durch**
Erzeugen des Zustandsberichts (<c,s>) in Echtzeit basierend auf den gegenwärtig an der Eingabeschnittstelle (130) verfügbaren Prüfungsergebnissen ({Rₜ}), wobei der Zustandsbericht (<c,s>) mittels vereinfachter Boole'scher Funktionen erzeugt wird, die eine Wahrheitstabelle aller möglichen Kombinationen der Prüfungsergebnisse ({Rₜ}) und deren Zustandsberichte (<c,s>) repräsentieren,
Empfangen zumindest einer Zustandsangabe ([i₁], ..., [iₓ]), die für jede Prüfung in dem Satz von Prüfungen (t₁, ..., tₓ) darstellt, ob oder ob nicht die Prüfung abgeschlossen worden ist, und
Erzeugen des Zustandsberichts (<c,s>) außerdem basierend auf der Zustandsangabe ([i₁], ..., [iₓ]).

9. Verfahren nach Anspruch 8, wobei die Zustandsangabe ([i₁], ..., [iₓ]) in Kombination mit dem Prüfungsergebnis ({Rₜ}) für jede Prüfung in dem Satz von Prüfungen (t₁, ..., tₓ) darstellt:
einen ersten Zustand, der angibt, dass die Prüfung noch nicht abgeschlossen ist,
einen zweiten Zustand, der angibt, dass die Prüfung ohne erkannte Fehler abgeschlossen worden ist, oder
einen dritten Zustand, der angibt, dass der Test mit zumindest einem erkannten Fehler abgeschlossen worden ist.

10. Verfahren nach einem der Ansprüche 8 oder 9,
wobei der Funktionszustand (s) für eine bestimmte Komponente
einen fehlerfreien Zustand (00),
einen Zustand (01) mit vermutetem Fehler oder
einen Zustand (11) mit bestätigtem Fehler
darstellt.

11. Verfahren nach einem der Ansprüche 8 bis 10,
wobei von jeder der Komponenten (c₁, ..., cₙ) angenommen wird, dass sie mit mehreren Verhaltensarten einschließlich einer fehlerfreien Art (NF) und zumindest zwei der folgenden Fehlerarten verknüpft ist: fehlerhaft (F), unbekannter Fehler (UF), Verstärkungsfehler (GF), Vorspannungsfehler (BF), positive Vorspannung (B⁺), negative Vorspannung (B⁻), Offenkreisfehler (OC) und Kurzschlussfehler (SC), und
wobei das Verfahren umfasst, den Zustandsbericht (<c,s>) derart zu erzeugen, dass der Bericht geeignet ist, einen jeweiligen Zustand für alle anwendbaren Kombinationen der Komponenten (c₁, ..., cₙ) und der Mehrzahl an Verhaltensarten (NF, F, UF, GF, BF, B⁺*,* B⁻, OC, SC) anzugeben, wobei die anwendbaren Kombinationen von jeder Komponente der Komponenten (c₁, ..., cₙ) und der Mehrzahl mit dieser Komponente verknüpfter Verhaltensarten vorgegeben sind.

12. Verfahren nach Anspruch 11 sofern rückbezogen auf Anspruch 10, wobei das Verfahren umfasst, den Zustandsbericht (<c,s>) derart zu erzeugen, dass der Zustandsbericht (<c,s>) für jede der Komponenten (c₁, ..., cₙ) und zumindest eine der damit verknüpften Fehlerarten (F, UF, GF, BF, B⁺*,* B⁻, OC, SC) den Zustand (01) mit vermutetem Fehler bezüglich zumindest einer der Fehlerarten (F, UF, GF, BF, B⁺*,* B⁻, OC, SC) oder den Zustand (11) mit bestätigtem Fehler bezüglich genau einer der Fehlerarten (F, UF, GF, BF, B⁺*,* B⁻, OC, SC) darstellt.

13. Verfahren nach einem der Ansprüche 8 bis 12,
wobei das Verfahren umfasst, den Zustandsbericht (<c,s>) derart zu erzeugen, dass eine Bereitschaftsinformation bezüglich jeder der Komponenten (c₁, ..., cₙ) darin enthalten ist, wobei die Bereitschaftsinformation für eine Komponente angibt:
einen Endwert, wenn von keiner weiteren Prüfung der Komponente erwartet wird, dass sie den gegenwärtigen Funktionszustand (s) der Komponente verändert, und
einen nichtendgültigen Wert, wenn eine weitere Prüfung der Komponente Prüfungsergebnisse ({Rₜ}) erzeugen kann, die den gegenwärtigen Funktionszustand (s) der Komponente verändern.

14. In den internen Speicher eines Computers ladbares Computerprogramm, umfassend Software zum Steuern der Schritte nach einem der Ansprüche 8 bis 13, wenn das Programm auf dem Computer ausgeführt wird.

15. Computerprogrammprodukt (120) mit einem darauf gespeicherten Programm, wobei das Programm dazu eingerichtet ist, einen Computer zu veranlassen, die Schritte nach einem der Ansprüche 8 bis 13 zu steuern.

## Revendications

1. Moteur de diagnostic en ligne (100) pour estimer un état d'une entité (150, 300) ayant une pluralité de composants (c₁, ..., cₙ) qui sont chacun supposés avoir un état de santé (s), le moteur de diagnostic en ligne (100) comprenant :
une interface d'entrée (130) adaptée pour recevoir des résultats ({Rₜ}) d'un ensemble de tests (t₁, ..., tₓ) concernant les composants (c₁, ..., cₙ), et
une unité de traitement (110) adaptée pour générer un rapport d'état (<c,s>) en fonction des résultats de tests ({Rₜ}), le rapport d'état (<c,s>) reflétant une qualité fonctionnelle de chacun desdits composants (c₁, ..., cₙ), **caractérisé en ce que**
l'unité de traitement (110) implémente des fonctions Booléennes simplifiées représentant une table de vérité de toutes les combinaisons possibles des résultats de tests ({Rₜ}) et de leur rapports d'état (<c,s>), et l'unité de traitement (110) est adaptée pour générer le rapport d'état (<c,s>) en temps réel en fonction des résultats de tests ({Rₜ}) actuellement disponibles sur l'interface d'entrée (130), et
l'interface d'entrée (130) est adaptée pour recevoir au moins un indicateur d'état ([i₁], ..., [iₓ]) qui, pour chaque test de l'ensemble de tests (t₁, ..., tₓ), reflète si le test a été achevé ou non, et l'unité de traitement (110) est adaptée pour générer le rapport d'état (<c,s>) en fonction en outre de l'indicateur d'état ([i₁], ..., [iₓ]).

2. Moteur de diagnostic en ligne (100) selon la revendication 1, dans lequel l'indicateur d'état ([i₁], ..., [iₓ]), en combinaison avec le résultat de tests ({Rₜ}), pour chaque test de l'ensemble de tests (t₁, ..., tₓ), reflète l'un de :
un premier état indiquant que le test n'est pas encore achevé,
un deuxième état indiquant que le test a été achevé sans que des défauts ne soient détectés, et
un troisième état indiquant que le test a été achevé avec au moins un défaut détecté.

3. Moteur de diagnostic en ligne (100) selon l'une quelconque des revendications précédentes, dans lequel l'état de santé (s) pour un composant donné reflète l'un de :
un état non défaillant (00),
un état de défaut suspecté (01), et
un état de défaut confirmé (11).

4. Moteur de diagnostic en ligne (100) selon l'une quelconque des revendications précédentes, dans lequel chacun desdits composants (c₁, ..., cₙ) est supposé être associé à une pluralité de modes comportementaux incluant un mode non défaillant (*NF*) et au moins deux des modes de défaut suivants : défaillant (*F*), défaut inconnu (*UF*), défaut de gain (*GF*)*,* défaut de biais (*BF*), biais positif (*B*⁺), biais négatif (*B*⁻), défaut de circuit ouvert (*OC*) et défaut de court-circuit (*SC*), et l'unité de traitement (110) est adaptée pour générer le rapport d'état (<c,s>) de telle sorte que le rapport puisse spécifier un état respectif pour toutes les combinaisons applicables desdits composants (c₁, ..., cₙ) et de ladite pluralité de modes comportementaux (*NF, F, UF, GF, BF, B*⁺*, B*⁻, *OC, SC),* les combinaisons applicables étant données par chaque composant desdits composants (c₁, ..., cₙ) et la pluralité de modes comportementaux associés à ce composant.

5. Moteur de diagnostic en ligne (100) selon la revendication 4 lorsqu'elle dépend de la revendication 4, dans lequel l'unité de traitement (110) est adaptée pour générer le rapport d'état (<c,s>) de telle sorte que, pour chacun desdits composants (c₁, ..., cₙ) et au moins l'un desdits modes de défaut *(F, UF, GF, BF, B*⁺*, B*⁻, *OC, SC*) qui lui est associé, le rapport d'état (<c,s>) reflète l'état de défaut suspecté (01) relativement à au moins l'un desdits modes de défaut *(F, UF, GF, BF, B*⁺*, B*⁻, *OC, SC)* ou l'état de défaut confirmé (11) relativement à exactement un desdits modes de défaut *(F, UF, GF, BF, B*⁺*, B*⁻, *OC, SC*).

6. Moteur de diagnostic en ligne (100) selon l'une quelconque des revendications précédentes, dans lequel l'unité de traitement (110) est adaptée pour générer le rapport d'état (<c,s>) de telle sorte que des informations de disponibilité relatives à chacun desdits composants (c₁, ..., cₙ) y soient incluses, les informations de disponibilité pour un composant indiquant :
une valeur finale si aucun test additionnel du composant n'est attendu qui modifierait l'état de santé (s) actuel du composant, et
une valeur non-finale si un test additionnel du composant est susceptible de produire des résultats de tests ({Rₜ}) qui modifieraient l'état de santé (s) actuel du composant.

7. Véhicule à moteur (300) consistant en une pluralité de composants (c₁, ..., cₙ ..., cₛ), le véhicule (300) ayant un système de diagnostic adapté pour estimer un état (s) respectif d'au moins un sous-groupe (c₁, ..., cₙ) desdits composants, lequel système de diagnostic comprend le moteur de diagnostic en ligne (100) selon l'une quelconque des revendications 1 à 7.

8. Procédé d'estimation d'un état d'une entité (150, 300) ayant une pluralité de composants (c₁, ..., cₙ) qui sont chacun supposés avoir un état de santé (s), le procédé comprenant :
la réception de résultats ({Rₜ}) d'un ensemble de tests (t₁, ..., tₓ) concernant les composants (c₁, ..., cₙ) via une interface d'entrée (130), et
la génération d'un rapport d'état (<c,s>) en fonction des résultats de tests ({Rₜ}), le rapport d'état (<c,s>) reflétant une qualité fonctionnelle de chacun desdits composants (c₁, ..., cₙ), **caractérisé par**
la génération du rapport d'état (<c,s>) en temps réel en fonction des résultats de tests ({Rₜ}) actuellement disponibles sur l'interface d'entrée (130), le rapport d'état (<c,s>) étant généré au moyen de fonctions Booléennes simplifiées représentant une table de vérité de toutes les combinaisons possibles des résultats de tests ({Rₜ}) et de leur rapports d'état (<c,s>),
la réception d'au moins un indicateur d'état ([i₁], ..., [iₓ]) qui, pour chaque test de l'ensemble de tests (t₁, ..., tₓ), reflète si le test a été achevé ou non, et
la génération du rapport d'état (<c,s>) en fonction en outre de l'indicateur d'état ([i₁], ..., [iₓ]).

9. Procédé selon la revendication 8, dans lequel l'indicateur d'état ([i₁], ..., [iₓ]), en combinaison avec le résultat de tests ({Rₜ}), pour chaque test de l'ensemble de tests (t₁, ..., tₓ), reflète l'un de :
un premier état indiquant que le test n'est pas encore achevé,
un deuxième état indiquant que le test a été achevé sans que des défauts ne soient détectés, et
un troisième état indiquant que le test a été achevé avec au moins un défaut détecté.

10. Procédé selon l'une quelconque des revendications 8 ou 9, dans lequel l'état de santé (s) pour un composant donné reflète l'un de :
un état non défaillant (00),
un état de défaut suspecté (01), et
un état de défaut confirmé (11).

11. Procédé selon l'une quelconque des revendications 8 à 10, dans lequel chacun desdits composants (c₁, ..., cₙ) est supposé être associé à une pluralité de modes comportementaux incluant un mode non défaillant (*NF*) et au moins deux des modes de défaut suivants : défaillant (*F*), défaut inconnu (*UF*), défaut de gain (*GF*), défaut de biais (*BF*), biais positif (*B*⁺), biais négatif (*B*⁻), défaut de circuit ouvert (*OC*) et défaut de court-circuit (*SC*), et le procédé comprend la génération du rapport d'état (<c,s>) de telle sorte que le rapport puisse spécifier un état respectif pour toutes les combinaisons applicables desdits composants (c₁, ..., cₙ) et de ladite pluralité de modes comportementaux (*NF, F, UF, GF, BF, B*⁺*, B*⁻, *OC, SC*), les combinaisons applicables étant données par chaque composant desdits composants (c₁, ..., cₙ) et la pluralité de modes comportementaux associés à ce composant.

12. Procédé selon la revendication 11, lorsqu'elle dépend de la revendication 10, dans lequel le procédé comprend la génération du rapport d'état (<c,s>) de telle sorte que, pour chacun desdits composants (c₁, ..., cₙ) et au moins l'un desdits modes de défaut (*F, UF, GF, BF, B*⁺*, B*⁻, *OC, SC*) qui lui est associé, le rapport d'état (<c,s>) reflète l'état de défaut suspecté (01) relativement à au moins l'un desdits modes de défaut *(F, UF, GF, BF, B*⁺*, B*⁻, *OC, SC)* ou l'état de défaut confirmé (11) relativement à exactement un desdits modes de défaut (*F, UF, GF, BF, B*⁺*, B*⁻, *OC, SC*).

13. Procédé selon l'une quelconque des revendications 8 à 12, dans lequel le procédé comprend la génération du rapport d'état (<c,s>) de telle sorte que des informations de disponibilité relatives à chacun desdits composants (c₁, ..., cₙ) y soient incluses, les informations de disponibilité pour un composant indiquant :
une valeur finale si aucun test additionnel du composant n'est attendu qui modifierait l'état de santé (s) actuel du composant, et
une valeur non-finale si un test additionnel du composant est susceptible de produire des résultats de tests ({Rₜ}) qui modifieraient l'état de santé (s) actuel du composant.

14. Programme informatique pouvant être chargé dans la mémoire interne d'un ordinateur, comprenant un logiciel pour commander les étapes de l'une quelconque des revendications 8 à 13 lorsque ledit programme est exécuté sur l'ordinateur.

15. Produit de programme informatique (120), sur lequel est enregistré un programme, lequel programme est destiné à permettre à un ordinateur de commander les étapes selon l'une quelconque des revendications 8 à 13.
